# EUROPÄISCHE PATENTSCHRIFT

(11) **EP 3 814 665 B1**
(45) Veröffentlichungstag und Bekanntmachung des Hinweises auf die Patenterteilung: **29.03.2023**
(21) Anmeldenummer: 19733954.2
(22) Anmeldetag: 04.06.2019
(51) Int. Cl.: F16L 55/163, F16L 55/179

(54) **DICHTVORRICHTUNG UND ZUGEHÖRIGE INNENMANSCHETTE**
SEALING DEVICE AND ASSOCIATED INNER SLEEVE
DISPOSITIF D'ÉTANCHÉITE ET MANCHON INTÉRIEUR ASSOCIÉ

(30) Priorität: 28.06.2018 DE 102018115678
(43) Veröffentlichungstag der Anmeldung: 05.05.2021
(73) Patentinhaber: Wenk, Christoph, 26524 Hage (DE)
(72) Erfinder: Wenk, Christoph, 26524 Hage (DE)
(74) Vertreter: Wischmeyer, André
(86) Internationale Anmeldenummer: PCT/EP2019/064424
(87) Internationale Veröffentlichungsnummer: WO 2020/001929

(56) Entgegenhaltungen:
- EP-B1- 0 805 932
- DE-A1- 19 631 082
- DE-A1-102015 003 515
- DE-C1- 19 910 522
- DE-U1-202016 101 481
- GB-A- 2 221 010

## Beschreibung

Die vorliegende Erfindung betrifft eine Dichtvorrichtung zur Abdichtung eines Übergangs zwischen einer Hauptleitung und einer Zweigleitung. Des Weiteren umfasst die Erfindung eine Innenmanschette, die insbesondere bei einer solchen Dichtvorrichtung eingesetzt werden kann. Schließlich betrifft die Erfindung ein Verfahren zur Installation einer Dichtvorrichtung in eine Haupt- und eine Zweigleitung.

Abzweigungen einer Hauptleitung für Fluide, die im Untergrund verlegt sind, weisen oftmals z.B. aufgrund von Verschiebungen des Erdreichs Bruchstellen direkt im Anschlussbereich von Zweig- zur Hauptleitung auf. Entsprechend kann das in den Leitungen transportierte Fluid, beispielsweise Trinkwasser, Abwasser oder auch Öl bei einer Beschädigung dieses Übergangsbereiches von der Zweigleitung in eine Hauptleitung oftmals unbemerkt ins Erdreich eindringen. Als Zweig- und Hauptleitung werden beliebige T- oder Y-förmige Bereiche von Leitungen verstanden, wobei typischerweise die Zweigleitung einen geringeren freien Rohrleitungsinnendurchmesser aufweist als die Hauptleitung, dies allerdings nicht notwendigerweise der Fall sei muss. Es kann sich beispielsweise auch um eine Gabelung handeln, bei sich eine Hauptleitung in zwei gleich große Zweigleitungen gabelt. Eine Hauptleitung und eine der beiden Zweigleitungen werden zum Zwecke der Anmeldung dann gemeinsam als Hauptleitung bezeichnet, während die weitere Zweigleitung dann die Zweigleitung im Sinne dieser Anmeldung ist.

Es sind bereits eine Vielzahl von Methoden vorgeschlagen worden, wie eine solche Beschädigung, sofern sie entdeckt wird, nachträglich abgedichtet wird.

Beispielsweise ist in der DE 10 2015 003 515 A1 eine Vorrichtung und ein Verfahren zur Abdichtung bzw. Sanierung eines solchen Übergangsbereichs beschrieben, bei dem ein Einleger, der einen Stutzen aufweist, in der Hauptleitung verspannt wird. Die Innenmanschette der Dichtvorrichtung ist hierbei sinnvollerweise so ausgebildet, dass eine Verstellung der Innenmanschette nur unter Vergrößerung des Außenumfangs der Innenmanschette möglich ist. Wie die Arretiervorrichtung funktioniert, ist allerdings nicht offenbart. Ebenfalls beispielhaft sei hier auf die Arretiervorrichtung gemäß der EP 0 805 932 B1 verwiesen, die eine Aufweitung der Innenmanschette zulässt. Eine Durchmesserverringerung entgegen der Richtung der Aufweitung selbst soll durch blockierend ineinandergreifende Zahnräder verhindert werden. Nachteilig ist hierbei, dass durch das Spiel der Zahnräder nach Aufweitung der Innenmanschette ein Zurückrasten in eine Position mit einem geringfügig geringeren Durchmesser erfolgt. Hierdurch entstehen Undichtigkeiten zwischen Einleger und Innenseite der Rohrleitung.

Darüber hinaus muss der um die Innenmanschette herumliegende Bereich ausgespritzt werden und aushärten, was ein aufwendiges langwieriges Verfahren darstellt.

Aus der DE 10 2015 003 515 A1, der DE 199 10 522 C1 sowie der DE 196 31 082 A1 sind Einleger bekannt, die einen festen, in die Zweigleitung einzuführenden Rohrstutzen aufweisen. Die DE 20 2016 101 481 U1 offenbart ebenfalls eine Dichtungsmanschette zum Einsetzen in ein Rohrleitungssystem, bei dem wenigstens ein Rastorgan einen Träger aufweist, der mit mehreren Federelementen federverschwenkbar in eine Zahnreihe rastend eingreifen kann. Aus der GB 2221010 A ist ein Liner mit einem Gelenk bekannt, der aus einer durchmesserreduzierten Gestalt in eine annähernd runde bzw. mit einem kreisförmigen Querschnitt versehene Form größeren Durchmessers geklappt werden kann.

Darüber hinaus ist es bekannt, ein sogenanntes "Hütchen" in die Zweigleitung einzubringen, das einen Kragen aufweist, der hauptleitungsseitig anzuordnen und an einen Liner der Hauptleitung anschließen soll. Der konusartig zulaufende Teil des Hütchens wird in die Zweigleitung eingebracht. Das Hütchen wird nach dem Einbringen z.B. durch UV-Bestrahlung ausgehärtet. Oftmals ergeben sich bereits aufgrund eines ungenauen Sitzes des Hütchens in der Leitung Undichtigkeiten. Darüber hinaus treten bei erneuter Verschiebung des Erdreichs Belastungen des starren Hütchens auf, welche wiederum zu einer Schädigung dessen Materials insbesondere bei weitergehender Schädigung der Haupt- oder Zweigleitung führen können. Dies kann zu verstärkten Undichtigkeiten führen.

Es ist Aufgabe der vorliegenden Erfindung, den Stand der Technik hinsichtlich der genannten Nachteile zu verbessern und insbesondere eine sicher in der Zweigleitung zu montierende Dichtvorrichtung bereitzustellen.

Die Aufgabe wird gelöst durch eine Dichtvorrichtung gemäß Anspruch 1 sowie durch ein Verfahren gemäß Anspruch 20. Vorteilhafte Ausgestaltungen der jeweiligen Erfindungen sind den auf die unabhängigen Ansprüche rückbezogenen Unteransprüchen sowie der nachfolgenden Beschreibung zu entnehmen.

Erfindungsgemäß ist vorgehen, dass die Dichtvorrichtung zur Abdichtung eines Übergangs zwischen einer Hauptleitung und einer Zweigleitung einen Einleger mit einem in der Hauptleitung anzuordnenden Hauptteil und einem in der Zweigleitung anzuordnenden Stutzen umfasst, wobei eine erste aufweitbare Innenmanschette zur Verspannung des Hauptteils in der Hauptleitung und mindestens eine zweite aufweitbare Innenmanschette zur Verspannung des Stutzens in der Zweigleitung vorgesehen ist und wobei die Innenmanschette dazu ausgebildet ist, über den aus einem Elastomer ausgebildeten Stutzen gegen die Zweigleitung verspannt zu werden, wobei sowohl der Hauptteil als auch der Stutzen jeweils einen insbesondere kragenförmigen Dichtungsbereich zur Dichtung aneinander aufweisen.

Es hat sich überraschenderweise gezeigt, dass dieselbe Technik, mit der ein Einleger oder auch ein Liner in der Hauptleitung verspannt wird, prinzipiell geeignet ist, in der Zweigleitung für einen sicheren Sitz des Stutzens zu sorgen, ohne dass etwaige Bereiche zwischen Einleger und Innenwandung oder Innenoberfläche der Haupt- bzw. Zweigleitung ausgefüllt werden müssen. Insbesondere handelt es sich um einen nicht durch z.B. Bestrahlung oder andere Materialeigenschaften ändernde Härteverfahren auszuhärtenden Stutzen. Der Einleger kann hierbei so auf den Durchmesser der Rohrleitung angepasst werden, dass er vergleichsweise dicht anliegt und auf seiner Außenseite, die zur Innenoberfläche der jeweiligen Leitung gerichtet ist, mittels etwaiger Dichtungen dicht an dieser Oberfläche anliegt. Die Oberfläche kann zum Beispiel durch eine innere, d.h. zur Leitungslängsmittelachse hinweisende Oberfläche der Leitungswand selbst oder eines eingebrachten Liners ausgebildet sein.

Insbesondere weist der erfindungsgemäße Gegenstand eine weitere, dritte Innenmanschette zur Festlegung des Hauptteils in der Hauptleitung auf, wobei die beiden zur Festlegung des Hauptteils vorgesehenen Innenmanschetten beabstandet voneinander und insbesondere auf unterschiedlichen Seiten bezüglich des Stutzens im Hauptteil anzuordnen sind. Somit wird ein beispielsweise T- oder Y-förmig ausgebildeter Einleger an allen seinen offenen Enden jeweils in der Rohrleitung verspannt, so dass unabhängig von leichten Verschiebungen von Haupt- und Zweigleitung zueinander ein dichter Sitz des Einlegers in der jeweiligen Leitung und somit eine Abdichtung der schadhaften Stelle erreicht wird.

Obgleich es möglich ist, den Einleger auf der Innenseite der Innenmanschetten zur Längsmittelachse einer Rohrleitung hin anzuordnen und die Innenmanschette gegen die Wand zu verspannen, ist es gemäß einer weiteren Ausbildung der Erfindung vorteilhaft, wenn zusätzlich zur Verspannung einer der Innenmanschetten über den Stutzen gegen die Zweigleitung eine der Innenmanschetten dazu ausgebildet ist, über den Hauptteil gegen die Hauptleitung oder verspannt zu werden. Der durch die Innenmanschetten kraftbeaufschlagte Bereich des Einlegers wird in unmittelbarer Anlage an die innere Oberfläche gebracht. Die Installation des Einlegers mit einem Verspannen der jeweiligen Innenmanschette von der Innenseite der jeweiligen Leitung her ist gut möglich.

Für eine verbesserte Integration und einen korrekten Sitz der Innenmanschetten kann der Einleger innenseitig an die Größe der Innenmanschetten angepasste Anlageflächen aufweisen. Dies vereinfacht beispielsweise durch ausgenommene Bereiche einen passenden Sitz der Innenmanschetten in der Rohrleitung und verhilft durch eine glattere und mit weniger Profilierung versehene Innenoberfläche der Dichtvorrichtung dieser zu einem ruhigeren Fluidtransport. Weiterhin ist die Gefahr von Ablagerungen reduziert.

Nicht erfindungsgemäß können Hauptteil und Stutzen einteilig miteinander ausgebildet sein.

Unabhängig hiervon kann insbesondere der Stutzen eine für eine Einbringung in die Hauptleitung notwendige Flexibilität aufweist. Beispielsweise kann der Stutzen zum Zwecke der Einbringung in die Rohrleitung zunächst auf der Innenseite des Hauptteils angeordnet sein, um dann anschließend in die Zweigleitung gestülpt zu werden.

Vorzugsweise ist der Hauptteil so lang in Richtung der Längserstreckung der Hauptleitung ausgebildet, dass beidseitig des Bereiches, in dem der Stutzen angeordnet ist, eine Verspannung mit jeweils einer Innenmanschette möglich ist.

Die Anordnung der Dichtvorrichtung in den Leitungen ist verbessert, wenn gemäß eines weiteren Ausführungsbeispiels der Erfindung der Einleger zweiteilig ausgebildet ist, wobei sowohl der Hauptteil als auch der Stutzen jeweils ein insbesondere kragenförmigen Dichtungsbereich aufweisen kann, welcher zur Dichtung der beiden Teile des Einlegers aneinander ausgebildet ist. Beispielsweise kann es sich um profilierte Dichtungsbereiche handeln, die komplementär zueinander mit ineinander greifenden Profile ausgebildet sind. Alternativ oder ergänzend können Hauptteil und Stutzen gegeneinander verrasten.

Je nachdem, welcher Dichtbereich in der Hauptleitung betrachtet von einer radialen Längsachse der jeweiligen Leitung aus der Äußere ist, kann dieser Dichtungsbereich des Stutzen und/oder des Hauptteils wenigstens eine in Richtung einer Innenoberfläche der Haupt- und/oder Zweigleitung anzuordnende bzw. weisende Dichtung aufweisen. Soweit die jeweiligen kragenförmigen Dichtungsbereiche in der Zweigleitung anzuordnen sind, würde die Dichtung gegen eine Innenoberfläche der Zweigleitung dichtend angeordnet werden. Anderenfalls würde die Abdichtung gegen eine Innenoberfläche der Hauptleitung erfolgen.

Zwecks verbesserter Positionierung des Stutzens in der Zweigleitung kann dieser ebenfalls über zwei Innenmanschetten positioniert werden, wobei eine Dichtmanschette am äußeren Ende, welches am weitesten entfernt von dem Hauptteil liegt, positioniert wird, während eine weitere Innenmanschette einen hauptleitungsnahen Bereich des Stutzens gegen die Innenoberfläche der Zweigleitung verspannt.

Vorteilhafterweise ist der Dichtungsbereich von Stutzen und/oder Hauptteil so starr ausgebildet, dass eine Positionierung der jeweiligen Dichtungsbereiche bzw. Anlagenflächen gegeneinander einfach möglich ist. Es kann sich hierbei um einen mit weichen Dichtungen versehenen vergleichsweise starren Kragen des Stutzens handeln, der eine gleichmäßige Verteilung der für einen Dichtsitz notwendigen Kräfte ermöglicht.

Vorzugsweise weist der Einleger wenigstens ein Befestigungsmittel zur Befestigung von Hauptteil und Stutzen aneinander auf, wobei es sich um insbesondere Rast- oder Klemmmittel handelt.

Besonders bevorzugt ist eine Ausbildung der Erfindung, bei der der Hauptteil zumindest im Wesentlichen ein aufwertbares, biegesteifes Formteil ist. Biegesteif ist der Hauptteil insbesondere dann, wenn durch eine Aufweitung des Hauptteils aufgrund der Aufweitung der diesen festlegenden Innenmanschetten ausreichend große Kräfte für einen Dichtsitz in den Dichtungsbereich zum Stutzen hin aufgebracht werden. D.h., es findet eine Übertragung von ausreichend großen Kräften hin zur Abdichtung des Stutzens gegen eine Innenoberfläche statt, ohne dass der Hauptteil sich unter Verlust oder Vermeidung des Dichtsitzes verbiegt.

Insbesondere kann es sich bei dem Formteil um ein solches handeln, welches unbeachtet etwaiger Innenmanschetten zu einer Abdeckung der Hauptleitung in Längsrichtung betrachtet von nicht mehr als 270° ausgebildet ist. Zur besseren Handhabung im Kanal ist beispielsweise ungeachtet etwaiger Innenmanschetten und eines eine Ausnehmung zum Übergang in den Stutzen hinein ausbildenden Bereiches eine einen halben Hohlzylinder ausbildende Form des Hauptteils gegeben.

Der Einleger kann insbesondere zumindest im Wesentlichen, also insbesondere vollständig, aus Edelstahl ausgebildet sein. Alternativ oder ergänzend kann es sich auch um einen Duroplasten, Thermoplasten oder ein Verbundmaterial handeln, welches mehrschichtig aufgebaut ist und dessen Eigenschaften insbesondere auf die benötigten Kräfte zur Verspannung des Stutzens mit dem Hauptteil ausgelegt sein. Darüber hinaus kann das Material der Dichtvorrichtung auf das zu transportierende Fluid abgestimmt werden.

Um eine nachträgliche Verschiebung durch weitere Bewegungen des Erdreichs abzufangen, ist der Stutzen vorzugsweise zumindest in Teilen, vorzugsweise überwiegend bzw. vollständig dauerhaft flexibel, sowie erfindungsgemäß aus einem Elastomer wie z.B. Weich-Gummi oder einem ausreichend flexiblen Polyurethan, ausgebildet. Darüber hinaus kann der Stutzen einen mehrfach umgelenkten Wandungsbereich aufweisen, bei dem dieser verbessert an den Übergangsbereich angepasst werden kann. Beispielsweise kann hierüber eine nicht rechtwinklige Anordnung an den Kanal erleichtert werden. Dieses kann beispielshaft durch eine ziehharmonikaartige Ausbildung eines Abschnitts des Stutzens erreicht werden. Durch eine dauerflexible Ausbildung des Stutzens kann dieser beispielsweise auch nach einer sich gleichwohl im Betrieb ergebenden Undichtigkeit durch Lösen der Innenmanschette bzw. der Innenmanschetten und Neuanbringung der Innenmanschetten verbessert positioniert und somit weiter verwendet werden.

Gemäß einer weiteren Ausbildung der Erfindung kann die Dichtvorrichtung wenigstens ein vorzugsweise durch eine Ausstülpung des Einlegers ausgebildetes Ventil aufweisen, durch das ein Bereich zwischen Einleger und Innenwand einer der Leitungen erreichbar ist. Hierdurch kann - sofern durch den Betreiber der Rohrleitung erwünscht - der zwischen Einleger und Innenwand der Rohrleitung befindliche Bereich ausgespritzt werden. Eine Ausstülpung des Einlegers ist hierbei eine Ausstülpung in radialer Richtung weg von einer Längsmittelachse einer zu betrachtenden Leitung.

Insbesondere kann eine Innenmanschette durch den Hauptteil mit ausgebildet werden, so dass eine Übertragung der durch das Aufweiten in der Rohrleitung auftretenden Kräfte auf den weiteren Bereich des Hauptteils gesichert erfolgt.

Eine Anordnung der Dichtvorrichtung in einer Rohrleitung ist des Weiteren verbessert, wenn gemäß einem weiteren Ausführungsbeispiel der Erfindung wenigstens eine Innenmanschette mit einer vorspannbaren Arretiervorrichtung versehen ist. Vorspannbar ist die Arretiervorrichtung dann, wenn sie ein zusätzliches Spannmittel aufweist, durch welches vor oder nach einem initialen Aufweiten und Verspannen in der Rohrleitung eine Kraft in der Innenmanschette gespeichert wird, aufgrund der das im Stand der Technik beobachtete Zurückfallen aufgrund eines Leerwegs in eine Position mit einem geringeren äußeren Durchmesser verhindert wird.

Vorteilhafterweise umfasst die Arretiervorrichtung wenigstens eine vorzugsweise als Federelement ausgebildete Kraftspeichereinheit, die durch Überführung der Innenmanschette in eine Betriebsposition vorgespannt wird. Eine als Federelement ausgebildete Kraftspeichereinheit kann konstruktiv optimal an den verwendeten Einleger im Kanal angepasst werden, beispielsweise als besonders flache Blattfeder oder als exakt geführte Federstange.

Insbesondere ist die Innenmanschette wenigstens mit einem für einen Kraft- oder Formschluss vorgesehenen Manschettenteil versehen und weist ein in radialer Richtung benachbarter weiterer Teil der Innenmanschette die Kraftspeichereinheit mit wenigstens einem für den Kraft- und/oder Formschluss vorgesehenen Gegenelement auf. Beispielsweise kann es sich hierbei um einen Klemmverschluss handeln, bei dem über eine Führung zweier schiefer Ebenen aneinander entlang eine zwischen diesen eingelegte Kugel zu einer Verklemmung führt.

Besonders bevorzugt weist der Manschettenteil eine Verzahnung auf, wobei das Gegenelement zumindest einen dann insbesondere in diese eingreifenden Zahn aufweist. Bevorzugt handelt es sich bei dem Gegenelement um drei Zahnräder, von denen eines zur Blockade der beiden weiteren Zahnräder, die jeweils für sich in eine Verzahnung des Manschettenteils eingreifen.

Die Kraftspeichereinheit ist auf einer Seite der Innenmanschette angeordnet, auf der ein Gegenelement, welches für einen Form- oder Kraftschluss und somit eine Arretierung sorgt, angeordnet ist. Zunächst wird über das Aufweiten der Innenmanschette die Arretiervorrichtung in eine dichtende Anlageposition an die Innenwandung oder Innenoberfläche der jeweiligen Rohrleitung gebracht. Hierbei wird die Kraftspeichereinheit entsprechend der bei der Aufweitung anliegenden Kraft kraftbeaufschlagt. Insbesondere ist eine als Feder- oder anders komprimierbares Element ausgebildete Kraftspeichereinheit so ausgelegt, dass sie durch die hierbei entstehende Kraft in Umfangsrichtung nicht oder nur geringfügig komprimiert oder gezogen wird. Durch das Einnehmen der Betriebsposition wird typischerweise bei rastenden oder klemmenden Vorrichtungen zunächst wieder eine geringfügige Durchmesserverringerung der Innenmanschette stattfinden, da ein für die Einnahme der Klemm- oder Rastposition notwendiger Leerweg bzw. ein zugehöriges Spiel in der Arretiervorrichtung vorhanden ist. Beispielsweise handelt es sich hierbei um ein für die Einnahme der Verklemmung notwendigen Verfahrweg oder das für den Übergang in eine Klemmposition notwendige Spiel miteinander kämmender Zahnräder.

Anschließend wird über eine Betätigung eines Spannmittels ein insbesondere das Gegenelement lagernder Teil der Innenmanschette dergestalt verschoben, dass sich die für eine Verspannung in der Rohrleitung wirksame Länge dieses Teil der Innenmanschette vergrößert, wobei die Kraftspeichereinheit vor- bzw. gespannt wird und eine Durchmesservergrößerung erzielt wird. Insbesondere wird ein Teil der Innenmanschette in Umfangsrichtung verschoben wird und somit werden die bereits in einer arretierten Position befindlichen Teile der Innenmanschette aus dieser Position wieder voneinander gelöst und aneinander entlang geschoben. Der hierfür von der Kraftspeichereinheit bereitstellbare Verfahrweg ist vorzugsweise gleich groß oder größer als der Leerweg zur Einnahme der Arretierposition der Arretiervorrichtung.

Bei Betätigung des Spannmittels, welches beispielsweise als Kniehebel ausgebildet ist, wird also der für eine Aufspannung wirksame Bereich eines Bandes einer Innenmanschette verlängert und das Gegenelement stützt sich auf beispielsweise einer Verzahnung des weiteren Bandes ab, so dass die Verlängerung bzw. Aufweitung zu einer verstärkten Verspannung in der jeweiligen Leitung führt.

Alternativ kann über zu drehende oder schwenkende Umlenkhebel auch eine Verspannung in Längsrichtung der jeweiligen Rohrleitung zu einer Umfangsvergrößerung der Innenmanschette führen. Alternative Ausbildungen des Spannmittels können beispielsweise einen Exzenter oder Auslöser für bereits vorgespannte Kraftspeicher, beispielsweise auch die Kraftspeichereinheit der Arretiervorrichtung, aufweisen. Ebenfalls könnte eine Spannung auch über ein oder mehrere Löte, die sich bei Erwärmung aufweiten, aufgebracht werden.

Vorzugsweise kann die Kraftspeichereinheit beispielsweise in Form einer Blattfeder in einem zumindest im Wesentlichen aus Metall hergestellten Hauptteil eines Einlegers ausgeführt werden. Alternativ ist es auch denkbar, die Kraftspeichereinheit insbesondere mit dem bezüglich einer radialen Längsmittelachse äußeren Teil einer Innenmanschette zu verbinden, beispielsweise durch Schweißen oder Nieten. Insofern ist die Kraftspeichereinheit dann in die Innenmanschette einsetzbar ausgebildet.

Eine besonders sichere Einbringung der Kraftspeichereinheit ist dann gegeben, wenn diese in Umfangsrichtung beidseitig eines das Gegenelement bildenden Basiselements angeordnet ist. Durch die vorzugsweise in Umfangsrichtung gegebene Lagerung des Basiselements ist eine genaue Positionierung der Kraftspeichereinheit und der Arretiervorrichtung, die mit der Kraftspeichereinheit gemeinsam ausgebildet ist, in der Leitung möglich.

Zur Aufbringung einer Vorspannung ist die Arretiervorrichtung vorzugsweise mit einem Spannmittel versehen, wobei die Arretiervorrichtung selbsthemmend und/oder verrastend ausgebildet ist. Ein solches Spannmittel kann nach der Aufweitung der Innenmanschette, die auf herkömmliche Weise beispielsweise durch einen aufpumpbaren Hohlkörper in der Leitung bewirkt wird, betätigt werden. Hierfür ist das Spannmittel vorzugsweise nach innen hin, d.h. in Richtung einer Längsmittelachse vorstehend ausgebildet bzw. zumindest von dieser Seite her beispielsweise durch eine Ausnehmung einer Innenteils einer Innenmanschette hindurch betätigbar. Insbesondere ist das Spannmittel als Kniehebel ausgebildet, über den die Kraftspeichereinheit je nach Ausbildung gegenüber einem Außenteil der Innenmanschette oder auch gegenüber einem Innenteil der Innenmanschette verspannt werden kann. Über die Kraftspeichereinheit wird eine Kraft beispielsweise auf ein das Gegenelement lagerndes Teil der Arretiervorrichtung, insbesondere ein Basiselement, übertragen, wobei sich das Gegenelement durch die aufgebrachte Kraft an dem beispielsweise die Verzahnung aufweisenden Manschettenteil abstützt und die Innenmanschette hierdurch aufweitet. Je nach Auslegung der Kraftspeichereinheit wird diese bereits hierbei oder bei Erreichen eines vorgebbaren und einer weiteren Aufweitung der Innenmanschette entgegenstehenden Gegendrucks gespannt. Die Einleitung der Kraft für zu einer Vorspannung der Kraftspeichereinheit, die der Innenmanschette langfristig an im Nachhinein nach Einnahme einer Arretierposition zur Verfügung steht. Insbesondere ist nach einer Aufweitung einer der Innenmanschetten ein für die Überführung der Arretiervorrichtung in deren Arretierposition notwendiger Leerweg maximal so lang wie ein Verfahrweg der Kraftspeichereinheit. Beispielsweise ist ein maximaler Hub bzw. Verfahrweg der Kraftspeichereinheit länger als der Abstand gleichseitiger Flanken zweier benachbarter Zähne der Verzahnung.

Gemäß einer besonders einfachen Weiterbildung der Erfindung kann das Verspannmittel als Kniehebel mit der Kraftspeichereinheit auch einstückig sowie insbesondere weiterhin einstückig mit dem Gegenelement ausgebildet werden. Beispielsweise stützt sich dieses Funktionsteil einerseits über die Zähne des die Verzahnung aufweisenden Teils der Innenmanschette und andererseits gegenüber dem dann relativ hierzu bewegenden weiteren Manschettenteil ab, während gleichzeitig die Kraftspeichereinheit integral mit ausgebildet ist.

Zwecks Überprüfung der Verspannsituation des Kraftspeicherelements und/oder der anliegenden Spannung an der Innenmanschette kann ein Vorspannungsindikator vorgesehen sein, der vorzugsweise durch zwei relativ zueinander bewegliche Elemente insbesondere eines inneren oder äußeren Teils der Innenmanschette ausgebildet ist. So kann über eine einfache optische Überprüfung nach Installation der Vorrichtung auch noch Monate später überprüft werden, ob eine notwendige Verspannung gegenüber der Innenwand der jeweiligen Rohrleitung gegeben ist

Die erfindungsgemäße Aufgabe wird bezüglich einer sicheren Anordnung der Dichtvorrichtung in der Rohrleitung auch entsprechend durch eine Innenmanschette mit einer Arretiervorrichtung, die wie vor- oder nachbeschriebenen ausgebildet ist, gelöst, wobei diese Arretiervorrichtung zur Verwendung in einer Dichtvorrichtung nach einem der Ansprüche 13 bis 21 ausgebildet ist. Entsprechend ist die Innenmanschette, sofern sie nicht einteilig mit dem Einleger ausgebildet ist, mit den vor- oder nachbeschriebenen Merkmalen versehen. Insbesondere ist sie somit wie vorbeschrieben mit einer Arretiervorrichtung versehen, welche selbsthemmend und/oder verrastend ausgebildet ist und ein zur Aufbringung einer Vorspannung vorgesehenes Spannmittel aufweist, wobei insbesondere nach einer Aufweitung der Innenmanschette ein für die Überführung der Arretiervorrichtung in deren Arretierposition notwendiger Leerweg kleiner ist als ein Verfahrweg einer etwaig vorhandenen Kraftspeichereinheit und beispielsweise ein maximaler Verfahrweg der Kraftspeichereinheit mindestens genauso lang ist wie der Abstand gleichseitiger Flanken zweier benachbarter Zähne einer Verzahnung eines Teils der Innenmanschette. Weiterhin ist die Innenmanschette insbesondere mit einer Arretiervorrichtung versehen, die wenigstens eine vorzugsweise als Federelement ausgebildete Kraftspeichereinheit umfasst, die durch Überführung der Innenmanschette in eine Betriebsposition vorgespannt wird.

Die eingangs gestellte Aufgabe wird ebenfalls durch ein Verfahren zur Abdichtung eines Übergangs zwischen einer Hauptleitung und einer Zweigleitung mit einer nach einem der Ansprüche 1 bis 21 ausgebildeten Dichtvorrichtung gelöst. Hierbei weist die Dichtvorrichtung einen Einleger mit einem Hauptteil und einem Stutzen auf, wobei der Einleger in die Hauptleitung und insbesondere anschließend der Stutzen in die Zweigleitung eingebracht wird, wobei der Hauptteil über zumindest eine aufweitbare Innenmanschette in der Hauptleitung verspannt wird und der Stutzen über zumindest eine zweite aufweitbare Innenmanschette in der Zweigleitung verspannt wird. Diesem erfindungsgemäßen Verfahren kommen die vorbeschriebenen Vorteile einer sicheren und insbesondere langfristigen Abdichtung der Rohr- bzw. Haupt- und Zweigleitung zugute.

Vorzugsweise wird eine zumindest weitere, dritte Innenmanschette in der Hauptleitung verspannt, wobei die beiden zur Festlegung des Hauptteils vorgesehenen Innenmanschetten beabstandet voneinander und insbesondere auf unterschiedlichen Seiten bezüglich des Stutzens im Hauptteil angeordnet werden.

Insbesondere wird der Stutzen des zumindest zweiteiligen Einlegers über den biegesteifen Hauptteil hauptleitungsseitig festgelegt. Dies erfolgt insbesondere über Dichtungsbereiche bzw. Anlagebereiche, in denen der biegesteife Hauptteil den vorzugsweise bis in die Hauptleitung hineinreichenden Kragen des Stutzens festlegt.

Ein Dichtungsbereich des Stutzens und/oder des Hauptteils mit einer dort befindlichen Dichtung wird gemäß einer weiteren erfindungsgemäßen Ausbildung in Anlage mit einer Innenoberfläche der Haupt- und/oder der Zweigleitung gebracht.

Durch die insbesondere biegesteifen Ausbildung des Hauptteils wird der Stutzen mit seinem Kragen vorzugsweise in der Hauptleitung, beispielsweise gegen einen dort vorhandenen Inliner, verspannt, so dass einerseits über die Anlegung der Innenmanschette, und zweitens über die Verspannung des Dichtungsbereichs des Stutzens hauptleitungsseitig eine zweite Dichtungsebene zur Abdichtung einer etwaigen Beschädigung im Übergangsbereich vorgesehen wird. Auch auf Seiten des Stutzens kann die Innenmanschette die endseitig des vom hauptleitungsseitig angeordneten Teil des Stutzens entfernt liegenden Bereiche mit einer oder mehreren Dichtungsebenen versehen sein. Darüber hinaus eignet sich das Verfahren auch zur Anbindung von Zweigleitungen an nachträglich mit (In-)Linern versehenen Hauptleitungen.

Zur Vermeidung von Lockerungen der Innenmanschetten kann nach einer ersten Verspannung einer der Innenmanschetten diese durch ein Spannmittel nachgespannt werden, wobei die Spannung insbesondere nach einer Installation, vorzugsweise über einen Vorspannungsindikator, überprüft werden kann. Gleichzeitig kann während des Nachspannens eine Kraftspeichereinheit der Innenmanschette gespannt werden. Das Nachspannen führt dazu, dass die Kraftspeichereinheit für etwaige nachfolgende Aufweitungen des Rohres oder Verschiebungen von Bruchstellen z.B. aufgrund des Verschiebens des Erdreiches vorgespannt ist.

Weitere Vorteile und Einzelheiten der Erfindung lassen sich der nachfolgenden Figurenbeschreibung entnehmen. Es zeigt:
- Fig. 1: einen erfindungsgemäßen Gegenstand in einer ersten Ansicht,
- Fig. 2: den Gegenstand nach Fig. 1 in einer weiteren Ansicht,
- Fig. 3: den Gegenstand nach Fig. 2 in einer Seitenansicht,
- Fig. 4: den Gegenstand nach Fig. 3 entlang des Schnitts B-B,
- Fig. 5: einen Schnitt durch eine in einer Haupt- und Zweigleitung angeordneten erfindungsgemäßen Gegenstand,
- Fig. 6: eine Explosionsdarstellung des Gegenstands nach Fig. 1,
- Fig. 7: eine erfindungsgemäße Innenmanschette in einer ungespannten Form,
- Fig. 8: den Gegenstand nach Fig. 7 in einer gespannten Betriebsstellung,
- Fig. 9: eine weitere Ausführungsform einer erfindungsgemäßen Innenmanschette,
- Fig. 10: den Gegenstand nach Fig. 9 in einer Explosionsdarstellung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

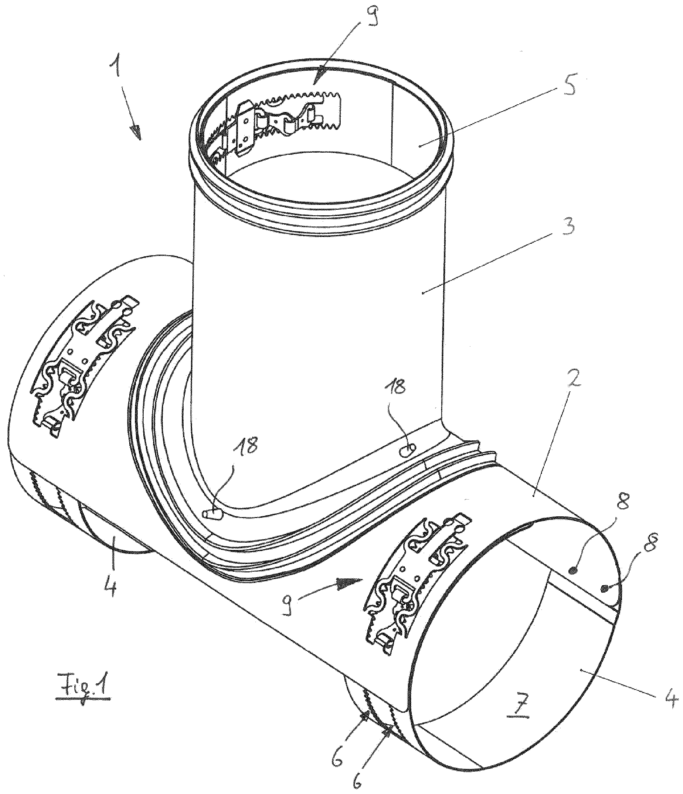

Eine erfindungsgemäße Dichtvorrichtung gemäß Fig. 1 zur Abdichtung eines Übergangs zwischen einer Haupt- und einer Zweigleitung umfasst einen Einleger 1, der einen in der Hauptleitung einzuordnenden Hauptteil 2 aufweist und einen in der Zweigleitung anzuordnenden Stutzen 3. Eine erste aufweitbare Innenmanschette 4 ist in Teilen einstückig mit dem Hauptteil 2 ausgebildet. Die Innenmanschette 4 umfasst hierbei neben einem eine Verzahnung 6 aufweisenden und als Band ausgebildeten Manschettenteil 7, welches über Schweißpunkte 8 mit der Innenmanschette 2 verbunden ist, eine nachfolgend noch weiter zu beschreibende Arretiervorrichtung 9.

Diese ist in Teilen einstückig mit dem Hauptteil 2 ausgebildet, so dass auch die Innenmanschette 4 in Teilen einteilig mit dem Hauptteil 2 ausgebildet ist.

Die Innenmanschette 4 dient der Festlegung des Hauptteils 2 in der Hauptleitung. Eine weitere Innenmanschette 5, die ebenfalls mit einer Arretiervorrichtung 9 versehen ist, dient der Festlegung des Stutzens 3.

Eine weitere Innenmanschette 4 ist zur Festlegung des Hauptteils beabstandet von der in der Fig. 1 rechten Innenmanschette und auf einer bezüglich des Stutzens unterschiedlichen Seite am Hauptteil 2 angeordnet. Gemeinsam kann über diese beiden Innenmanschetten 4 der biegesteife, im Wesentlichen aus einem Metallblech, insbesondere aus Edelstahl, ausgebildete Hauptteil in der Hauptleitung festgelegt werden. Die Innenmanschetten 4 dienen der Festlegung des Hauptteils 2 durch Verspannung desselben gegen die Innenwand der Hauptleitung.

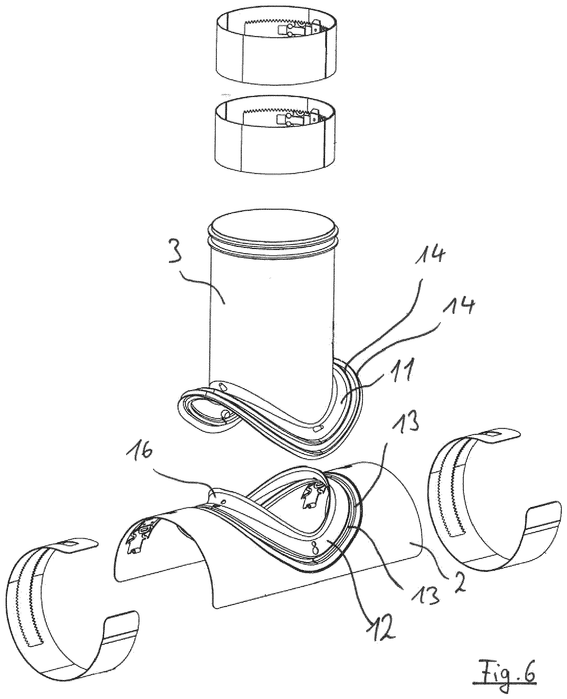

Sowohl der Hauptteil 2 als auch der Stutzen 3 weisen kragenförmige Dichtungsbereiche 11,12 auf. Während der Dichtungsbereich 12 des Hauptteils 2 (vgl. Fig. 6) zwei umlaufende Dichtlippen 13 aufweist, die zur dichten Anlage an die Unterseite des Dichtungsbereichs 11 dienen, weist der Stutzen 3 in Richtung einer Innenoberfläche der Hauptleitung anzuordnende Dichtungen 14 auf. Durch das Anpressen des Dichtungsbereichs 11 mittels des Hauptteils 2 gegen eine Innenoberfläche der Hauptleitung nimmt der Stutzen somit einen Dichtsitz ein, der etwaige Leckagen im Übergangsbereich zwischen Haupt- und Zweigleitung abzudichten vermag bzw. dem Übergang von einem in der Hauptleitung angeordneten Liner in die Zweigleitung dient. Der Hauptteil 2 weist weiterhin einen mit einem Hinterschnitt versehenen Kragen 16 auf, der mit dem Stutzen 3 innenseitig verrasten kann.

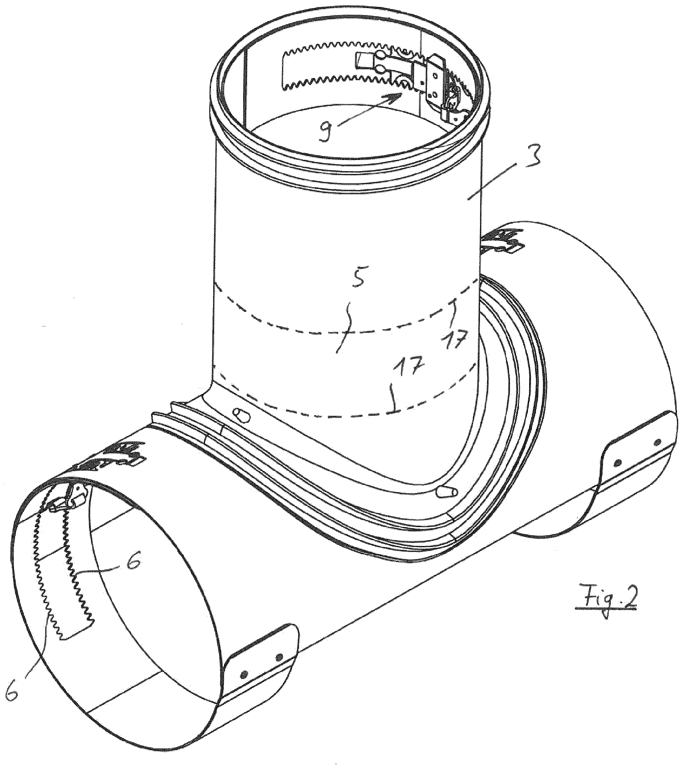

Eine weitere Innenmanschette 5 ist am zur Hauptleitung gerichteten Ende des Stutzens 3 angeordnet, was durch gestrichelte Linien 17 angedeutet ist (Fig. 2).

Ventile 18 eröffnen die Möglichkeit, aus der Leitung heraus einen zwischen Rohrinnenoberfläche und Einleger befindlichen Bereich mit einem aushärtenden Material zu befüllen.

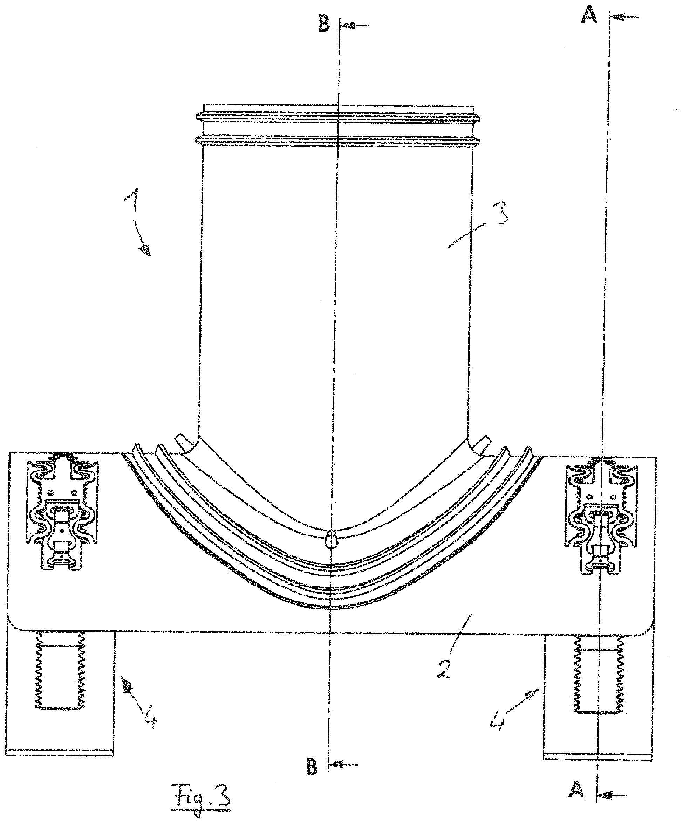

Der Einleger 1 ist unbeachtet etwaiger Innenmanschetten 4 bezüglich seines Hauptteils 2 zur Abdeckung der Hauptleitung in Längsrichtung betrachtet von nicht mehr als 270° ausgebildet. Vorliegend ist (Fig. 3) lediglich eine Abdeckung von rund 180° gegeben. Der Hauptteil weist somit in etwa die Form eines halben Hohlzylinders auf, der eine Ausnehmung zum Ansetzen des Stutzens 3 besitzt. Er ist somit deutlich besser in der Rohrleitung transportierbar und zum Einsatzort verbringbar als etwaige Hauptteile, die vollumfänglich die Rohrleitungsinnenoberfläche abdecken.

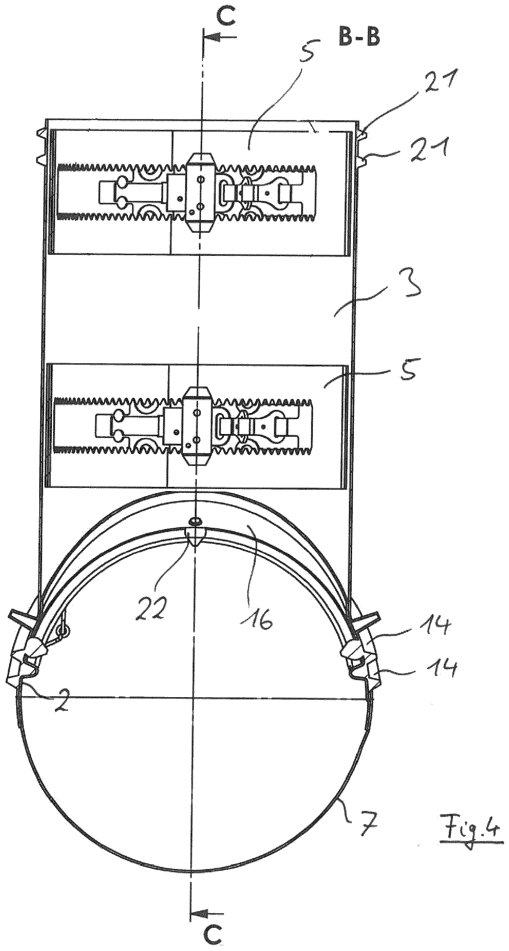

Der gemäß Fig. 4 geschnitten dargestellte Stutzen 3 ist dauerhaft flexibel ausgebildet und an seinem in der Fig. 4 oberen Ende, das am weitesten in die Zweigleitung einzuführen ist, außenseitig mit Stutzen-Dichtlippen 21 versehen, die mittels der Innenmanschette 5 gegen die innere Oberfläche der Zweigleitung gedrückt werden. Die in der Fig. 4 untere Innenmanschette 5 sorgt für einen festen Sitz des Stutzens in dem kritischen Übergangsbereich zur Hauptleitung. Ein pilzkopfartiges und in einen Öffnung des Hauptteils 2 einzuführendes Befestigungsmittel 22 dient ähnlich wie der Kragen 16 ebenfalls zur sicheren Festlegung des Stutzens 3 an dem Hauptteil 2.

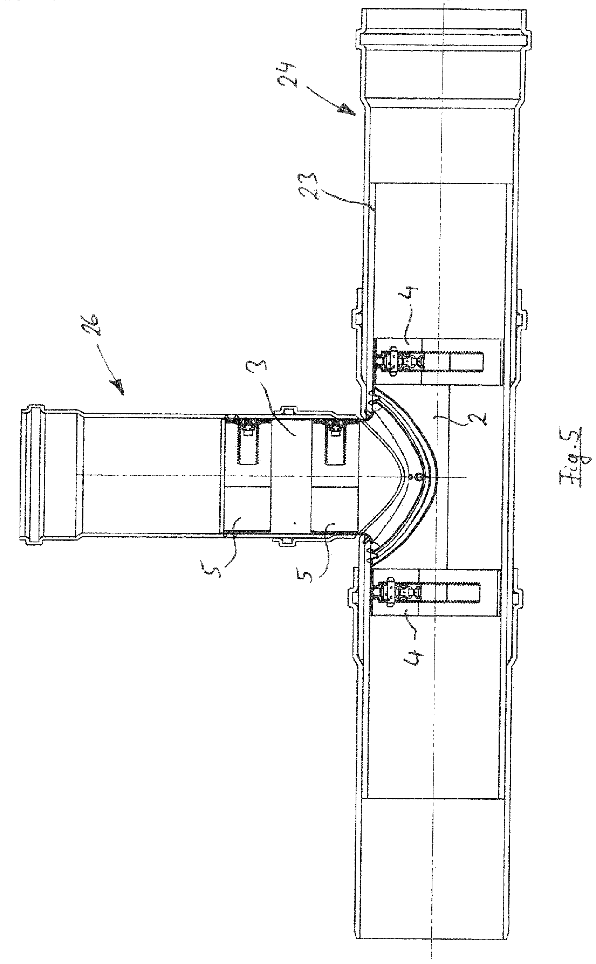

Die Dichtvorrichtung kann direkt in einer ohne Liner versehenen Rohrleitung bzw. einer Hauptleitung angeordnet werden. Sie kann auch in einer nachträglich mit einem Liner 23 versehenen Rohrleitung zur Abdichtung eines Übergangs zu einem Abzweig angeordnet werden (Fig. 5). Gemäß dem Ausführungsbeispiel nach Fig. 5 ist eine Hauptleitung 24 mit einer Abzweigung in eine Zweigleitung 26 versehen, wobei die Hauptleitung 24 mit einem Liner 23 ausgekleidet wurde. Die Dichtvorrichtung dichtet nun einen Übergangsbereich zur Zweigleitung 26 ab, in dem der Stutzen 3 mit seinem Kragen in Richtung der Innenoberfläche der Hauptleitung, die vorliegend durch die innere Oberfläche des Liners 23 ausgebildet wird, gedrückt wird. Der biegesteife Hauptteil 2 wird hierbei durch die Innenmanschetten 4 verspannt und dichten mittelbar die Verbindung Stutzen zu Liner ab. Innenmanschetten 5 verspannen den Stutzen 3 in der Zweigleitung. Somit wird der Stutzen 3 mittelbar durch die beiden Innenmanschetten 4 und den Einleger 2 sowie die beiden Innenmanschetten 5 fest verspannt, wobei der Übergangsbereich abgedichtet ist.

Gemäß Fig. 6 ist eine erfindungsgemäße Dichtvorrichtung in einer Explosionsdarstellung dargestellt. Nicht näher dargestellt sind Teile der Arretiervorrichtung einer erfindungsgemäßen Innenmanschette, die in den nachfolgenden Figuren näher erörtert wird.

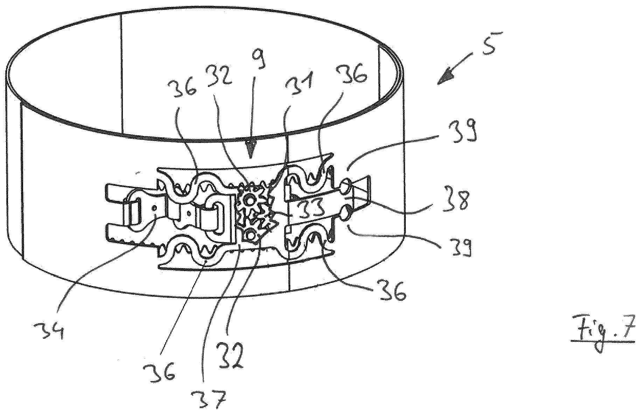

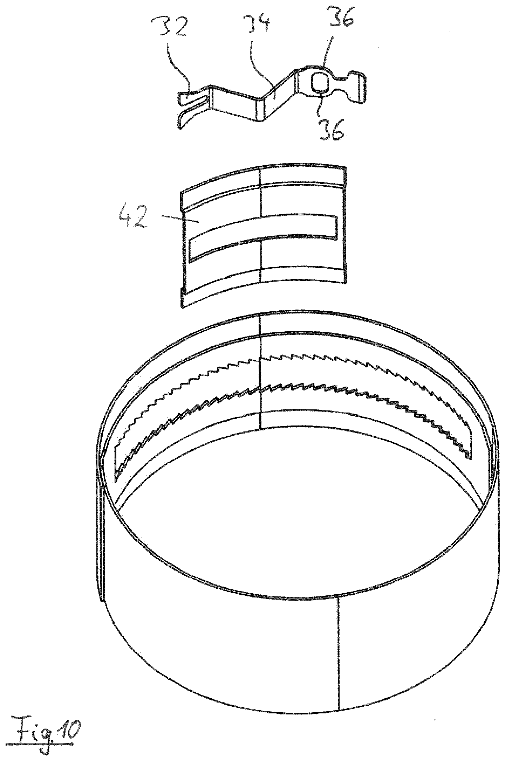

Eine erfindungsgemäße Innenmanschette weist jeweils eine insbesondere in den Fig. 7 und 8 oder 9 und 10 näher dargestellte Arretiervorrichtung 9 auf. In der Fig. 7 ist die Arretiervorrichtung 9 und die Innenmanschette 5 teilweise aufgebrochen (Linie 31 dargestellt). Hierdurch werden mit Zähnen versehene Gegenelemente 32 sichtbar. Die beiden übereinander angeordneten Gegenelemente 32 (Zahnräder) kämmen mit einem zur Blockade einer Zurückbewegung vorgesehenem Blockadeelement 33, welches ebenfalls in Form eines Zahnrads ausgebildet ist.

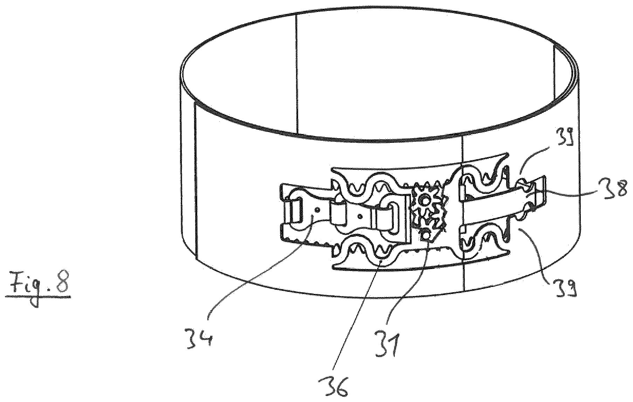

Durch das Aufweiten der Innenmanschette 5 in der Haupt- oder Zweigleitung 24,26 dreht sich das in der Zeichnung obere linke Gegenelement gegen den Uhrzeigersinn, während sich das untere Gegenelement 32 mit dem Uhrzeigersinn dreht. Hierdurch wird ein federbelastet in eine Anlageposition gehaltene, und ebenfalls als Zahnrad ausgebildete Arretierelement 33 von den beiden als Zahnrädern ausgebildeten Gegenelementen 32 weggedrückt, weswegen das Aufweiten nicht behindert wird. Nach der Aufweitung der Innenmanschette 5 verrastet das Arretierelement 33 aufgrund der dann wieder erfolgenden Anlage mit den beiden nun entgegengesetzt drehenden Zahnrädern bis hin zu einer Arretierposition, in der ein weiteres Zusammenfahren der Innenmanschette nicht weiter möglich ist. Durch die nachfolgend beschriebene erfindungsgemäße Weiterbildung der Innenmanschette 5 ist das Zusammenschrumpfen der Innenmanschette, das zu einer Undichtigkeit im Rohr führen kann, verhindert. Hierzu wird nach dem Aufspannen und Leerweg-bedingten Zusammensacken ein vorliegend als Kniehebel ausgebildetes Spannmittel 34 betätigt. Hierdurch werden die vorliegend durch vier geschwungene, streifenförmige Bereiche 36 der Kraftspeichereinheit auf Zug (links der Zahnräder) und auf Druck (rechts der Zahnräder) belastet. Durch diese Betätigung des Spannmittels erfolgt ein Verschieben der vorliegenden im äußeren Teil gelagerten Gegenelemente entlang der Verzahnung und somit wiederum ein Aufweiten der Innenmanschette (Fig. 8). Die eingebrachte Kraft führt zur Abstützung der Gegenelemente 32 auf der Verzahnung. Der Verfahrweg des Kraftspeicherelementes ist hierbei größer als der Leerweg, der durch das Zusammenschrumpfen der Innenmanschette 5 überbrückt wurde, so dass die Innenmanschette wiederum in die aufgeweitete Position überführt werden kann.

Durch die Kraftspeichereinheit, die vorliegend in Umfangsrichtung beidseits eines des Gegenelements lagernden Basiselements 37 angeordnet ist, kann die Innenmanschette den Einfluss externer Kräfte, beispielsweise aufgrund Verschiebungen des Erdreiches, zusätzlich ausgleichen, ohne dass eine strukturelle Beschädigung der Innenmanschette erfolgt.

Die gespannte Position mit einem betätigten Spannmittel 34 ist in der Fig. 4 gezeigt. Zwei relativ zueinander bewegliche Bereiche 38 und 39, die halbrunde Ausnehmungen aufweisen, welche im ungespannten Zustand jeweils einen Kreis darstellen, dienen als Vorspannungsindikator. Im gespannten Zustand sind die beiden Halbkreise der Bereiche 38 und 39 gegeneinander verschoben, so dass die gespannte Position ablesbar ist, auch wenn das Spannmittel 34 beispielsweise nach Überführung der Arretiervorrichtung in die in der Fig. 8 dargestellte Position entnommen wird.

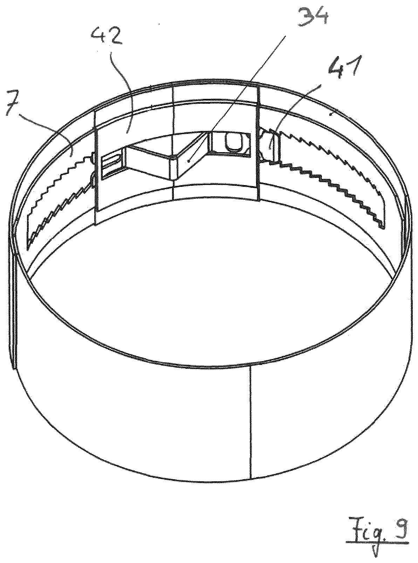

Ein weiteres Ausführungsbeispiel einer erfindungsgemäßen Innenmanschette ist gemäß Fig. 9 einfacher aufgebaut. Während der als Band ausgebildete Manschettenteil 7 der Innenmanschette wiederum beidseitig eine Ausnehmung begrenzende Verzahnungen aufweist, sind vorliegend die Kraftspeichereinheit, das Spannmittel 34 und das Gegenelement 32 einstückig miteinander ausgebildet. Dieses Funktionsteil stützt sich mit seinem einen Ende 41 an einem Außenteil der Innenmanschette ab und geht anschließend in eine Kraftspeichereinheit ausbildende federnde Bereiche 36 über, an die einstückig wiederum das Spannmittel 34 angeformt ist, welches wiederum in zwei in die Verzahnung eingreifende Gegenelemente 32 übergeht. Über eine Schelle 42 wird das Funktionselement in seinem Sitz in der Ausnehmung des Manschettenteils 7 gehalten.

Durch ein zunächst mittels eines üblichen Positionier- und Aufweitungsmittel in Form beispielsweise eines aufblasbaren Ballons in der Rohrleitung erfolgte Aufweitung verschiebt den innen und den äußeren Teil der Innenmanschette relativ zueinander, wobei die als Gegenelemente 32 ausgebildeten Zähne eine Aufweitung der Innenmanschette herbeiführend entlang der Verzahnung im Uhrzeigersinn gleiten. Nach dem beispielsweise eine Aufweitung zu einem unvollständigen Überspringen des nächsten Zahnes geführt hat, weswegen die Innenmanschette dann ihren Durchmesser beim Luftablassen wieder verringert, kann über den Kniehebel und die Relativverschiebung zwischen innerem und äußerem Teil der Innenmanschette die notwendige Verspannung wieder hergestellt werden. Dies geht einher mit einer Beaufschlagung des Kraftspeicherelements und führt ähnlich wie im vorherigen Fall zu einer Verlängerung des sich an der Verzahnung abstützenden Teils der Innenmanschette. Gleichzeitig wird durch die Kraftspeichereinheit, gebildet durch die beiden federnden Bereiche 36 das Aufbringen einer zu großen Kraft auf die Innenmanschette begrenzt. Die Kraftspeichereinheit ist somit dergestalt ausgebildet, dass sie durch das initiale Aufweiten mittels herkömmlicher Mittel wie beispielsweise einem aufblasbarem Ballon weniger oder nur geringfügig beeinflusst wird, andererseits allerdings durch das Überführen des Spannmittels eine für eine Aufweitung der Innenmanschette ausreichend große Kraft über mindestens einen Verfahrweg bereitstellt, der gleich oder größer dem Abstand gleichseitiger und insbesondere zur Festlegung benötigter Flanken benachbarter Zähne der Verzahnung (Ausführungsbeispiel Fig. 7,8,9,10) ist.

## Patentansprüche

1. Dichtvorrichtung zur Abdichtung eines Übergangs zwischen einer Hauptleitung (24) und einer Zweigleitung (26), umfassend einen Einleger (1) mit einem in der Hauptleitung (24) anzuordnenden Hauptteil (2) und einem in der Zweigleitung (26) anzuordnenden Stutzen (3), wobei eine erste aufweitbare Innenmanschette (4) zur Verspannung des Hauptteils (2) in der Hauptleitung (24) vorgesehen ist, und mindestens eine zweite aufweitbare Innenmanschette (5) zur Verspannung des Stutzens (3) in der Zweigleitung (26) vorgesehen ist, **dadurch gekennzeichnet, dass** der Einleger zweiteilig ausgebildet ist, wobei sowohl der Hauptteil (2) als auch der Stutzen (3) jeweils einen insbesondere kragenförmigen Dichtungsbereich (11,12) zur Dichtung aneinander aufweisen, wobei die Innenmanschette dazu ausgebildet ist, über den aus einem Elastomer ausgebildeten Stutzen gegen die Zweigleitung verspannt zu werden.

2. Dichtvorrichtung nach Anspruch 1, **gekennzeichnet durch** eine weitere, dritte Innenmanschette (4) zur Festlegung des Hauptteils (2) in der Hauptleitung (24), wobei die beiden zur Festlegung des Hauptteils (2) vorgesehenen Innenmanschetten (4) beabstandet voneinander und insbesondere auf unterschiedlichen Seiten bezüglich des Stutzens (3) in der Hauptleitung (24) anzuordnen sind.

3. Dichtvorrichtung nach Anspruch 1 oder 2, **dadurch gekennzeichnet, dass** zumindest eine der Innenmanschetten (4,5) dazu ausgebildet ist, über den Hauptteil (2) gegen die Hauptleitung verspannt zu werden.

4. Dichtvorrichtung nach einem der vorherigen Ansprüche, **dadurch gekennzeichnet, dass** der Einleger (1) innenseitig an die Größe der Innenmanschetten (4,5) angepasste Anlageflächen aufweist.

5. Dichtvorrichtung nach einem der vorherigen Ansprüche, **dadurch gekennzeichnet, dass** der Dichtungsbereich (11) des Stutzens (3) und/oder des Hauptteils (2) wenigstens eine in Richtung einer Innenoberfläche der Haupt- und/oder der Zweigleitung (24,26) anzuordnende Dichtung (14) aufweist.

6. Dichtvorrichtung nach einem der vorherigen Ansprüche, **dadurch gekennzeichnet, dass** der Einleger (1) wenigstens ein Befestigungsmittel (22) zur Befestigung von Hauptteil (2) und Stutzen (3) aneinander aufweist.

7. Dichtvorrichtung nach einem der vorherigen Ansprüche, **dadurch gekennzeichnet, dass** der Hauptteil (2) zumindest im Wesentlichen ein aufweitbares, biegesteifes Formteil ist, insbesondere welches unbeachtet etwaiger Innenmanschetten (4) zu einer Abdeckung der Hauptleitung (24) in Längsrichtung betrachtet von nicht mehr als 270° ausgebildet ist.

8. Dichtvorrichtung nach einem der vorherigen Ansprüche, **dadurch gekennzeichnet, dass** das Material zumindest des in der Zweigleitung (26) anzuordnenden Teils des Stutzens (3) dauerhaft flexibel ausgebildet ist und/oder dieser Teil einen mehrfach umgelenkten Wandungsbereich zur verbesserten Anpassung des Stutzens (3) aufweist.

9. Dichtvorrichtung nach einem der vorherigen Ansprüche, **gekennzeichnet durch** wenigstens ein vorzugsweise durch eine Ausstülpung des Einlegers (1) ausgebildetes Ventil (18).

10. Dichtvorrichtung nach einem der vorherigen Ansprüche, **dadurch gekennzeichnet, dass** zumindest eine Innenmanschette (4) durch den Hauptteil (2) mit ausgebildet wird.

11. Dichtvorrichtung nach einem der vorherigen Ansprüche, **gekennzeichnet durch** wenigstens eine Innenmanschette (5) mit einer vorspannbaren Arretiervorrichtung (9).

12. Dichtvorrichtung nach Anspruch 11, **dadurch gekennzeichnet, dass** die Arretiervorrichtung (9) wenigstens eine vorzugsweise als Federelement ausgebildete Kraftspeichereinheit umfasst, die durch Überführung der Innenmanschette (4,5) in eine Betriebsposition vorgespannt wird.

13. Dichtvorrichtung nach Anspruch 12, **dadurch gekennzeichnet, dass** die Innenmanschette (4,5) wenigstens einen für einen Kraft- oder Formschluss vorgesehenen Manschettenteil (7) umfasst und ein in radialer Richtung benachbarter weiterer Teil der Innenmanschette (4,5) die Kraftspeichereinheit und wenigstens ein für den Kraft- oder Formschluss vorgesehenes Gegenelement (32) aufweist.

14. Dichtvorrichtung nach Anspruch 13, **dadurch gekennzeichnet, dass** der Manschettenteil (7) eine Verzahnung aufweist und das Gegenelement (32) einen Zahn umfasst.

15. Dichtvorrichtung nach Anspruch 13 oder 14, **dadurch gekennzeichnet, dass** die Kraftspeichereinheit einstückig mit der Innenmanschette (4,5) oder in diese einsetzbar ausgebildet ist.

16. Dichtvorrichtung nach ein Anspruch 15, **dadurch gekennzeichnet, dass** die Kraftspeichereinheit im Umfangsrichtung beidseitig eines das Gegenelement (32) lagernden Basiselements (37) angeordnet ist.

17. Dichtvorrichtung nach einem der Ansprüche 11 bis 16, **dadurch gekennzeichnet, dass** die Arretiervorrichtung (9) selbsthemmend und/oder verrastend ausgebildet ist und ein zur Aufbringung einer Vorspannung vorgesehenes Spannmittel (34) aufweist.

18. Dichtvorrichtung nach Anspruch 17, **dadurch gekennzeichnet, dass** nach einer Aufweitung einer der Innenmanschetten (4,5) ein für die Überführung der Arretiervorrichtung (9) in deren Arretierposition notwendiger Leerweg maximal so lang ist wie ein Verfahrweg der Kraftspeichereinheit.

19. Dichtvorrichtung nach einem der Ansprüche 11 bis 18, **gekennzeichnet durch** einen Vorspannungsindikator, der vorzugsweise durch zwei relativ zu einander bewegliche Elemente (38,39) insbesondere eines inneren oder äußeren Teils der Innenmanschette (4,5) ausgebildet ist.

20. Verfahren zur Abdichtung eines Übergangs zwischen einer Hauptleitung (24) und einer Zweigleitung (26) mit einer nach einem der Ansprüche 1 bis 19 ausgebildeten Dichtvorrichtung, die einen Einleger (1) mit einem Hauptteil (2) und einem Stutzen (3) umfasst, wobei der Einleger (1) in die Hauptleitung (24) und insbesondere anschließend der Stutzen (3) in die Zweigleitung (26) eingebracht wird, wobei der Hauptteil (2) über zumindest eine aufweitbare Innenmanschette (4) in der Hauptleitung (24) verspannt wird, der aus einem Elastomer ausgebildeten Stutzen (3) in der Zweigleitung (26) verspannt wird, wozu eine zweite aufweitbare Innenmanschette (5) über den Stutzen (3) gegen die Zweigleitung verspannt wird.

21. Verfahren nach Anspruch 20, **dadurch gekennzeichnet, dass** der Hauptteil über eine weitere, dritte Innenmanschette (4) in der Hauptleitung verspannt wird, wobei die beiden zur Festlegung des Hauptteils (2) vorgesehenen Innenmanschetten (4) beabstandet voneinander und insbesondere auf unterschiedlichen Seiten bezüglich des Stutzens (3) im Hauptteil (2) angeordnet werden.

22. Verfahren nach Anspruch 20 oder 21, **dadurch gekennzeichnet, dass** der Stutzen (3) des zumindest zweiteiligen Einlegers (1) über den biegesteifen Hauptteil (2) hauptleitungsseitig festgelegt wird.

23. Verfahren nach einem der Ansprüche 20 bis 22, **dadurch gekennzeichnet, dass** ein Dichtungsbereich (11) des Stutzens (3) und/oder des Hauptteils (2) mit einer dort befindlichen Dichtung (14) in Anlage mit einer Innenoberfläche der Haupt- und/oder der Zweigleitung (24,26) gebracht wird.

24. Verfahren nach einem der Ansprüche 20 bis 23, **dadurch gekennzeichnet, dass** nach einen ersten Verspannung einer der Innenmanschetten (4,5) diese durch ein Spannelement (34) nachgespannt wird.

25. Verfahren nach Anspruch 24, **dadurch gekennzeichnet, dass** während der Nachspannung eine Kraftspeichereinheit der Innenmanschette (4,5) gespannt wird.

## Claims

1. Sealing device for sealing a transition between a main line (24) and a branch line (26), comprising an insert (1) having a main part (2) to be arranged in the main line (24) and a connector (3) to be arranged in the branch line (26), wherein a first expandable inner sleeve (4) for bracing the main part (2) in the main line (24) is provided, and at least one second expandable inner sleeve (5) for bracing the connector (3) in the branch line (26) is provided, **characterized in that** the insert is made in two parts, wherein both the main part (2) and the connector (3) have a respective, in particular collar-shaped, sealing region (11, 12) for providing sealing in relation to one another, wherein the inner sleeve is designed to be braced against the branch line by the connector, which is made from an elastomer.

2. Sealing device according to Claim 1, **characterized by** a further, third inner sleeve (4) for securing the main part (2) in the main line (24), wherein the two inner sleeves (4) provided to secure the main part (2) are to be arranged in the main line (24) spaced apart from one another and in particular on different sides in relation to the connector (3).

3. Sealing device according to Claim 1 or 2, **characterized in that** at least one of the inner sleeves (4, 5) is designed to be braced against the main line by the main part (2).

4. Sealing device according to one of the preceding claims, **characterized in that**, on the inside, the insert (1) has contact surfaces that are adapted to the size of the inner sleeves (4, 5).

5. Sealing device according to one of the preceding claims, **characterized in that** the sealing region (11) of the connector (3) and/or of the main part (2) has at least one seal (14) which is to be arranged in the direction of an inner surface of the main line and/or the branch line (24, 26).

6. Sealing device according to one of the preceding claims, **characterized in that** the insert (1) has at least one fastening means (22) for fastening the main part (2) and the connector (3) to one another.

7. Sealing device according to one of the preceding claims, **characterized in that** the main part (2) is at least substantially an expandable, flexurally rigid shaped part, in particular which, irrespective of any inner sleeves (4), is designed to cover the main line (24), as viewed in the longitudinal direction, by not more than 270°.

8. Sealing device according to one of the preceding claims, **characterized in that** the material at least of that part of the connector (3) that is to be arranged in the branch line (26) is permanently flexible, and/or that part has a multiply deflected wall region for improved adaptation of the connector (3).

9. Sealing device according to one of the preceding claims, **characterized by** at least one valve (18), which is preferably formed by a protrusion of the insert (1).

10. Sealing device according to one of the preceding claims, **characterized in that** at least one inner sleeve (4) is also formed by the main part (2).

11. Sealing device according to one of the preceding claims, **characterized by** at least one inner sleeve (5) having a preloadable locking device (9).

12. Sealing device according to Claim 11, **characterized in that** the locking device (9) comprises at least one energy store unit, which is preferably in the form of a spring element and is preloaded by transferring the inner sleeve (4, 5) to an operating position.

13. Sealing device according to Claim 12, **characterized in that** the inner sleeve (4, 5) comprises at least one sleeve part (7) provided for a force fit or form fit, and a radially adjacent further part of the inner sleeve (4, 5) has the energy store unit and at least one mating element (32) provided for the force fit or form fit.

14. Sealing device according to Claim 13, **characterized in that** the sleeve part (7) has a toothset and the mating element (32) comprises a tooth.

15. Sealing device according to Claim 13 or 14, **characterized in that** the energy store unit is formed in one piece with, or is insertable into, the inner sleeve (4, 5).

16. Sealing device according to Claim 15, **characterized in that** the energy store unit is arranged on either side, in the circumferential direction, of a base element (37) on which the mating element (32) is mounted.

17. Sealing device according to one of Claims 11 to 16, **characterized in that** the locking device (9) has a self-locking and/or latching form and has a loading means (34) provided to apply a preload.

18. Sealing device according to Claim 17, **characterized in that**, after expansion of one of the inner sleeves (4, 5), an idle travel required to transfer the locking device (9) to its locking position is at most as long as a displacement travel of the energy store unit.

19. Sealing device according to one of Claims 11 to 18, **characterized by** a preload indicator which is preferably formed by two elements (38, 39), in particular of an internal or external part of the inner sleeve (4, 5), that are movable relative to one another.

20. Method for sealing a transition between a main line (24) and a branch line (26), having a sealing device which is designed according to one of Claims 1 to 19 and comprises an insert (1) having a main part (2) and a connector (3), wherein the insert (1) is introduced into the main line (24) and in particular then the connector (3) is introduced into the branch line (26), wherein the main part (2) is braced in the main line (24) by at least one expandable inner sleeve (4), and the connector (3) made from an elastomer is braced in the branch line (26), to which end a second expandable inner sleeve (5) is braced against the branch line by the connector (3).

21. Method according to Claim 20, **characterized in that** the main part is braced in the main line by a further, third inner sleeve (4), wherein the two inner sleeves (4) provided to secure the main part (2) are arranged in the main part (2) spaced apart from one another and in particular on different sides in relation to the connector (3).

22. Method according to Claim 20 or 21, **characterized in that** the connector (3) of the at least two-part insert (1) is secured to the main line by way of the flexurally rigid main part (2).

23. Method according to one of Claims 20 to 22, **characterized in that** a sealing region (11) of the connector (3) and/or of the main part (2), by way of a seal (14) located therein, is brought into contact with an inner surface of the main line and/or of the branch line (24, 26).

24. Method according to one of Claims 20 to 23, **characterized in that**, after one of the inner sleeves (4, 5) has been braced, it is subjected to load again by a loading element (34).

25. Method according to Claim 24, **characterized in that** an energy store unit of the inner sleeve (4, 5) is loaded while the latter is being subjected to load again.

## Revendications

1. Dispositif d'étanchéité destiné à étanchéifier un passage entre un conduit principal (24) et un conduit de dérivation (26), ledit dispositif d'étanchéité comprenant un insert (1) pourvu d'une partie principale (2) à disposer dans le conduit principal (24) et un piquage (3) à disposer dans le conduit de dérivation (26), un premier manchon intérieur extensible (4) étant prévu pour serrer la partie principale (2) dans le conduit principal (24), et au moins un deuxième manchon intérieur extensible (5) étant prévu pour serrer le piquage (3) dans le conduit de dérivation (26), **caractérisé en ce que** l'insert est conçu en deux parties, la partie principale (2) et le piquage (3) comportant chacun une zone d'étanchéité en forme de collerette (11, 12) pour assurer l'étanchéité l'un contre l'autre, le manchon intérieur étant conçu pour être serré contre le conduit de dérivation par le biais du piquage en élastomère.

2. Dispositif d'étanchéité selon la revendication 1, **caractérisé par** un autre troisième manchon intérieur (4) destiné à fixer la partie principale (2) dans le conduit principal (24), les deux manchons intérieurs (4) prévus pour fixer la partie principale (2) étant destinés à être disposés à distance l'un de l'autre et notamment sur des côtés différents par rapport au piquage (3) dans le conduit principal (24).

3. Dispositif d'étanchéité selon la revendication 1 ou 2, **caractérisé en ce qu'**au moins un des manchons intérieurs (4, 5) est conçu pour être serré contre le conduit principal par le biais de la partie principale (2) .

4. Dispositif d'étanchéité selon l'une des revendications précédentes, **caractérisé en ce que** l'insert (1) comporte du côté intérieur des surfaces d'appui adaptées à la taille des manchons intérieurs (4, 5) .

5. Dispositif d'étanchéité selon l'une des revendications précédentes, **caractérisé en ce que** la zone d'étanchéité (11) du piquage (3) et/ou de la partie principale (2) comporte au moins une garniture d'étanchéité (14) à disposer en direction d'une surface intérieure du conduit principal et/ou du conduit de dérivation (24, 26).

6. Dispositif d'étanchéité selon l'une des revendications précédentes, **caractérisé en ce que** l'insert (1) comporte au moins un moyen de fixation (22) destiné à fixer la partie principale (2) et le piquage (3) l'un à l'autre.

7. Dispositif d'étanchéité selon l'une des revendications précédentes, **caractérisé en ce que** la partie principale (2) est au moins sensiblement une pièce moulée rigide extensible, en particulier qui est conçue pour recouvrir le conduit principal (24) sur pas plus de 270° lorsque l'on regarde dans la direction longitudinale, indépendamment d'éventuels manchons intérieurs (4).

8. Dispositif d'étanchéité selon l'une des revendications précédentes, **caractérisé en ce que** le matériau au moins de la partie du piquage (3) à disposer dans le conduit de dérivation (26) est conçu pour être en permanence souple et/ou cette partie comporte une zone de paroi à déviations multiples destinée à effectuer une adaptation améliorée du piquage (3).

9. Dispositif d'étanchéité selon l'une des revendications précédentes, **caractérisé par** au moins une soupape (18) formée de préférence par une protubérance de l'insert (1).

10. Dispositif d'étanchéité selon l'une des revendications précédentes, **caractérisé en ce qu'**au moins un manchon intérieur (4) est formé par la partie principale (2).

11. Dispositif d'étanchéité selon l'une des revendications précédentes, **caractérisé par** au moins un manchon intérieur (5) pourvu d'un dispositif de blocage précontraint (9).

12. Dispositif d'étanchéité selon la revendication 11, **caractérisé en ce que** le dispositif de blocage (9) comprend au moins une unité d'accumulation d'énergie qui est de préférence conçue comme un élément à ressort et qui est précontrainte par transfert du manchon intérieur (4, 5) dans une position de fonctionnement.

13. Dispositif d'étanchéité selon la revendication 12, **caractérisé en ce que** le manchon intérieur (4, 5) comprend au moins une partie de manchon (7) prévue pour une liaison en force ou par complémentarité de formes et une autre partie du manchon intérieur (4, 5), adjacente dans la direction radiale, comporte l'unité d'accumulation d'énergie et au moins un élément homologue (32) prévu pour une liaison en force ou par complémentarité de formes.

14. Dispositif d'étanchéité selon la revendication 13, **caractérisé en ce que** la partie de manchon (7) comporte une denture et l'élément homologue (32) comporte une dent.

15. Dispositif d'étanchéité selon la revendication 13 ou 14, **caractérisé en ce que** l'unité d'accumulation d'énergie est conçue d'une seule pièce avec le manchon intérieur (4,5) ou peut être insérée dans celui-ci.

16. Dispositif d'étanchéité selon la revendication 15, **caractérisé en ce que** l'unité d'accumulation d'énergie est disposée dans la direction circonférentielle de part et d'autre d'un élément de base (37) supportant l'élément homologue (32).

17. Dispositif d'étanchéité selon l'une des revendications 11 à 16, **caractérisé en ce que** le dispositif de blocage (9) est conçu pour être autobloquant et/ou à encliquetage et comporte un moyen de serrage (34) prévu pour appliquer une précontrainte.

18. Dispositif d'étanchéité selon la revendication 17, **caractérisé en ce que**, après une extension de l'un des manchons intérieurs (4, 5), la course à vide nécessaire au transfert du dispositif de blocage (9) dans la position de blocage de celui-ci est au maximum aussi longue qu'un trajet de déplacement de l'unité d'accumulation d'énergie.

19. Dispositif d'étanchéité selon l'une des revendications 11 à 18, **caractérisé par** un indicateur de précontrainte qui est formé de préférence par deux éléments (38, 39) mobiles l'un par rapport à l'autre, notamment d'une partie intérieure ou extérieure du manchon intérieur (4, 5).

20. Procédé d'étanchéification d'un passage entre un conduit principal (24) et un conduit de dérivation (26) à l'aide d'un dispositif d'étanchéité conçu selon l'une des revendications 1 à 19 qui comprend un insert (1) pourvu d'une partie principale (2) et d'un piquage (3), l'insert (1) étant introduit dans le conduit principal (24) et, en particulier, le piquage (3) étant ensuite introduit dans le conduit de dérivation (26), la partie principale (2) étant serrée dans le conduit principal (24) par le biais d'au moins un manchon intérieur extensible (4), le piquage (3) conçu en élastomère étant serré dans le conduit de dérivation (26), ce pour quoi un deuxième manchon intérieur extensible (5) est serré contre le conduit de dérivation par le biais du piquage (3).

21. Procédé selon la revendication 20, **caractérisé en ce que** la partie principale est serrée dans le conduit principal par le biais d'un autre troisième manchon intérieur (4), les deux manchons intérieurs (4) prévus pour fixer la partie principale (2) étant disposés à distance l'un de l'autre et notamment sur des côtés différents par rapport au piquage (3) dans la partie principale (2).

22. Procédé selon la revendication 20 ou 21, **caractérisé en ce que** le piquage (3) de l'insert (1) au moins en deux parties est fixé du côté conduit principal par le biais de la partie principale rigide (2) .

23. Procédé selon l'une des revendications 20 à 22, **caractérisé en ce qu'**une zone d'étanchéité (11), pourvue d'une garniture d'étanchéité (14), du piquage (3) et/ou de la partie principale (2) est amenée en appui sur une surface intérieure du conduit principal et/ou du conduit de dérivation (24, 26).

24. Procédé selon l'une des revendications 20 à 23, **caractérisé en ce que**, après un premier serrage de l'un des manchons intérieurs (4, 5), celui-ci est soumis à un serrage supplémentaire par un élément de serrage (34) .

25. Procédé selon la revendication 24, **caractérisé en ce qu'**une unité d'accumulation d'énergie du manchon intérieur (4, 5) est serrée pendant le serrage supplémentaire.
